# EUROPÄISCHE PATENTSCHRIFT

(11) **EP 1 347 305 B1**
(45) Veröffentlichungstag und Bekanntmachung des Hinweises auf die Patenterteilung: **26.10.2005**
(21) Anmeldenummer: 03006027.1
(22) Anmeldetag: 19.03.2003
(51) Int. Cl.: G01S 5/14, B60R 25/00, G08G 1/123

(54) **Einrichtung zum Auffinden eines abgestellten mobilen Gegenstandes, insbesondere eines abgestellten Fahrzeugs**
Device for determining the location of an immobile Object, especially for an immobile Vehicle
Dispositif pour la localisation dans objet immobile, en particulier pour un véhicule

(30) Priorität: 21.03.2002 DE 10213367; 15.01.2003 DE 10301992
(43) Veröffentlichungstag der Anmeldung: 24.09.2003
(73) Patentinhaber: Pöllet, Wilfried, D-90596 Schwanstetten (DE)
(72) Erfinder: Pöllet, Wilfried, D-90596 Schwanstetten (DE)

(56) Entgegenhaltungen:
- EP-A- 1 030 167
- WO-A-00/34933
- DE-A- 19 938 951

## Beschreibung

Die Erfindung betrifft eine Einrichtung gemäß dem Oberbegriff des Anspruches 1.

Eine derartige Einrichtung ist aus der DE 1 99 38 951 A1 in Form eines Schlüssels mit integriertem Satellitennavigationsempfänger und Positionsspeicher zur Positionsangabe eines abgestellten Fahrzeugs relativ zu einem aktuell abseits gelegenen Standort bekannt. Diesbezüglich ist dort vorgesehen, den Satellitenempfänger - z.B. unter seinem Anschluß an den Schlüsselbart als seiner Empfangsantenne - im Zuge des Verschließens des zurückzulassenden Fahrzeugs einzuschalten und die so gewonnene momentane Positionsinformation in einen Datenspeicher im Schlüssel zu übergeben. Wenn später vom beliebigen gerade erreichten anderen Standort aus eine Zielinformation benötigt wird, um zum Fahrzeug zurück zu finden, wird der Satellitenempfänger im Schlüssel manuell eingeschaltet und dadurch der aktuelle Standort erfaßt. Eine im Schlüssel zusätzlich enthaltene Rechnereinheit ermittelt den Vektor aus Entfernung und Richtung vom aktuell erfaßten Standort aus zur abgespeicherten Parkposition. Auf nicht näher offenbarte Weise soll nun ein bestimmter Richtungspfeil aufleuchten, wenn der Schlüssel grob in die zum abgestellten Fahrzeug einzuschlagende Richtung weist. Allerdings ist zu bezweifeln, daß es mittels einer in ein Schlüsselloch eingesteckten Antenne möglich ist, auch nur einen Navigationssatelliten zuverlässig zu empfangen, geschweige denn in hinnehmbar kurzer Zeitspanne gleich nacheinander die für die Berechnung von Positionskoordinaten erforderlichen mindestens vier Satelliten. Und wie angesichts der beliebigen Richtungslage des Schlüssels im Raum eine absolute Zielrichtungsanzeige vom Standort aus erfolgen kann, ist ebenfalls nicht offenbart.

In der DE 1 01 13 889 A1 ist eine solche auf einem Koordinatenvergleich basierende Fahrzeug-Sucheinrichtung mit ihrem Satellitenempfänger als mobiler Transponder bezeichnet, der in eine Armbanduhr integriert sein könne, um eine optische Richtungsinformation längs der Peripherie des Zifferblattes mittels einzeln ansteuerbarer Leuchtpunkte ohne weiteres am Handgelenk abrufen zu können. Da für den Empfang der Satellitenfrequenzen aber freie Sichtverbindung zu den gerade auszuwertenden mindestens vier Satellitenpositionen gegeben sein muß, andererseits die Armbaduhr gewöhnlich vom Ärmel eines Bekleidungsstückes bedeckt wird, ist eine brauchbare Standortbestimmung nicht kurzfristig zu erwarten. Und da die Lage der Uhr im Raum für die Schaltung nicht erkennbar ist, erscheinen Richtungshinweise längs des Zifferblattes illusorisch.

Der Erfindung liegt deshalb die technische Problemstellung zugrunde, eine Einrichtung gattungsgemäßer Art dahingehend zu verbessern, daß ein rascheres, zuverlässigeres Auffinden der Position des abzustellenden Fahrzeugs unter Berücksichtigung optimierbarer Energiebilanz für den Betrieb der Einrichtung mit eindeutiger Richtungsauswertung erzielt wird.

Diese Aufgabe ist gemäß der im Hauptanspruch angegebenen Merkmalskombination dadurch gelöst, daß die Einrichtung herausnehmbar in einer Halterung im Fahrzeug angeordnet ist, ggf. mit ihrem Satellitenempfänger samt Empfangsantenne unter der Front- oder Heckscheibe des Fahrzeugs und dann vorzugsweise auf dem Armaturenbrett. Dort erhält die Einrichtung aus der fahrzeugeigenen Navigationsanlage bzw. aus ihrem eigenen Empfänger stets die aktuellen Ortskoordinaten an ihren Positionsspeicher geliefert. Laufend wird die abgespeicherte Fahrzeugposition von der aktuelleren überschrieben. Der Dauerbetrieb des Empfängers ist energetisch problemlos, weil die wiederaufladbare Batterie in der Einrichtung aus dem Fahrzeugnetz gepuffert oder umgeladen wird, solange die Einrichtung in ihrer Halterung steckt.

Mit Entnahme der Einrichtung aus ihrer fahrzeugfesten Halterung wird der momentane Speicherinhalt als die Position eingefroren, in welcher das Fahrzeug zurückgelassen wird. Um der Vergesslichkeit vorzubeugen, kann vorgesehen sein, ein z.B. optisches oder akustisches Erinnerungssignal auszulösen, wenn beim Abziehen des Zündschlüssels oder jedenfalls beim Verschließen des Fahrzeugs die Einrichtung noch in ihrer Halterung im Fahrzeug stecken sollte. So ist sichergestellt, daß mit dieser Einrichtung später eine eingespeicherte Abstellposition - z.B. auf dem Großparkplatz einer Messe oder eines Baumarktes bzw. auf einem Waldparkplatz im Wandergelände - an anderem Standort verfügbar ist. Andererseits kann eine derartige Erinnerung auch daran erfolgen, die noch entnommene Einrichtung in ihre Halterung zurück zu stecken, wenn das Fahrzeug bewegt oder wenigstens sein Fahrzeugmotor gestartet wird, um künftig wieder die Fahrzeugposition im Speichere zu aktualisieren.

Wenn das abgestellte Fahrzeug von einem dagegen abgelegenen Standort aus wieder aufgesucht werden soll, etwa nach Verlassen des Messe- bzw. Einkaufsgebäudes oder von einem Ausflugsrestaurant aus, wird der Empfänger in der mitgeführten Einrichtung manuell eingeschaltet und nun von der zuvor in der Halterung aufgeladenen Batterie betrieben. Es ist zweckmäßig, die Einrichtung während diesen Empfangsbetriebes auf einen Cafetisch oder eine Mauer ruhig abzulegen, um infolge freier Sicht zur Hemisphäre und stabiler Antennenausrichtung in optimal kurzer Zeitspanne die notwendigen vier Sattelitenpositionen für die koordinatenmäßige Bestimmung des momentanen Standortes zu erfassen. Dieser Einmeßvorgang läßt sich noch stärker beschleunigen, wenn der beim Empfänger der Einrichtung enthaltene Rechner aufgrund zuvor abgespeicherter Bahndaten für zu empfangende Navigationssatelliten (etwas des Systems GPS, GLONASS oder künftig GALILEI) nach der Entnahme der Einrichtung aus der Fahrzeughalterung fortan intern die bekannten Satellitenbahnen mitkoppelt, so daß nach dem manuellen Einschalten des Empfängers nur noch eine Korrelation der aktuell ungewiß empfangenen mit den für diesen Zeitpunkt zuverlässiger extrapolierten Satellitenpositionen zu erfolgen hat. Das entlastet die Stromversorgung infolge nur kurzeitig erforderlichen Empfangsbetriebes.

Jedenfalls steht schon sehr bald nach dem manuellen Einschalten der Einrichtung darin eine Vektorinformation über die Fahrzeugposition relativ zum aktuellen Standort, also nach Richtung und Entfernung zur Verfügung; womit der Empfänger sich zur Entlastung der Batterie gleich wieder abschalten kann. Die Entfernung vom eigenen Standort zur Fahrzeugposition kann nun direkt digital auf einem Display der Einrichtung angezeigt werden.

Für eine zusätzliche unmittelbare Richtungsanzeige würde es allerdings des zusätzlichen Aufwandes einer richtungsempfindlichen Antenne bedürfen, um die momentane Orientierung der Einrichtung im Raum fixieren zu können. Technologisch einfacher ist es, in die Einrichtung einen elektronischen Kompaß zu integrieren, so daß auf einer etwa das Digitaldisplay umgebenden oder im Mosaikdisplay dargestellten Skala die Nordrichtung und die davon abweichende Richtung zur Fahrzeugposition darstellbar sind.

Schaltungstechnisch am einfachsten ist es, auf eine Nordreferenz, also auf den Aufwand für das Implementieren eines Kompasses zur absoluten Richtungsermittlung zu verzichten und stattdessen die manuell ausgelöste rasche Standortermittlung zu wiederholen, nachdem man sich einige Meter in die vermutlich zutreffende Richtung auf das Fahrzeug zu bewegt hat - nämlich auf jeden Fall von einem etwa im Hintergrund befindlichen Gebäude fort. Schaltungsintern wird durch erneutes kurzzeitiges Einschalten des Satellitenempfängers eine neue Vektorbestimmung zur Fahrzeugposition vorgenommen, während die jüngste manuell ausgelöste Standortbestimmung noch als Vergleichsinformation mit der aktuell ausgelösten Standortbestimmung abgespeichert ist. Wenn die Entfernung sich vergrößert, muß man umdrehen; wenn der Zielvektor (also die Richtungsanzeige zum Fahrzeug hin) beispielsweise stark nach links dreht, muß man sich stärker in diese Richtung wenden. Je besser also die Richtungsangaben der sich verkürzenden Zielvektoren von den beiden jüngst erreichten Standorten zur Fahrzeugposition hin übereinstimmen, desto zielstrebiger ist die tatsächliche Bewegung auf die Position des entfernt abgestellten Fahrzeugs zu gerichtet.

Erfindungsgemäß wird so mittels einer portablen Einrichtung von einem aktuell erreichten Standort aus ein zur abgelegenen Parkposition eines Fahrzeuges hin weisender Zielvektor generiert, indem mittels der für die Auswertung des Satellitenempfangs ohnehin vorhandenen Rechnereinheit die mit Entnahme aus dem Fahrzeug in die Einrichtung eingespeicherte Parkposition mit der aktuell vom Satellitennavigationsempfänger dieser Einrichtung gelieferten Standortinformation verglichen wird. Man bewegt sich geradewegs auf das Fahrzeug zu, wenn die Zielvektoren zweier aufeinander folgend erreichter Standorte bei konstanter Richtung kleiner werden.

## Patentansprüche

1. Einrichtung zum Auffinden eines abgestellten Fahrzeugs, von einem aktuellen Standort aus mittels eines mobilen Empfängers für Navigationssatelliten, dessen Rechnereinheit die Abstellposition bei Verlassen des Fahrzeugs abspeichert und diese zur Ausgabe einer Zielinformation mit einer manuell ausgelösten Standortermittlung vergleicht, **dadurch gekennzeichnet, daß** sie herausnehmbar in einer Halterung im Fahrzeug angeordnet ist und fortlaufend die aktuelle Position abspeichert, bis sie aus der Halterung entnommen wird.

2. Einrichtung nach Anspruch 1, **dadurch gekennzeichnet, daß** sie in der Halterung aus dem Fahrzeugnetz gespeist bzw. gepuffert wird.

3. Einrichtung nach einem der vorangehenden Ansprüche, **dadurch gekennzeichnet, daß** sie ihre Positionsinformationen aus einer fahrzeugeigenen Navigationsanlage erhält.

4. Einrichtung nach einem der vorangehenden Ansprüche, **dadurch gekennzeichnet**, sie unter der Front- oder der Heckscheibe des Fahrzeugs angeordnet ist.

5. Einrichtung nach einem der vorangehenden Ansprüche, **dadurch gekennzeichnet, daß** sie mit einer raumfesten Richtungsreferenz ausgestattet ist, der gegenüber die Zielrichtung angegeben ist.

6. Einrichtung nach einem der Ansprüche 1 bis 4, **dadurch gekennzeichnet, daß** sie über eine weiterer Speicherposition verfügt, die den zurückliegenden Positionsdaten zugeordnet ist, und daß eine Anzeige über den Unterschied der beiden jüngsten Zielrichtungen vorgesehen ist.

## Claims

1. Device for determining the location of a parked vehicle from a current location by means of a mobile receiver for navigation satellites whose computer unit stores the parked position when the user leaves the vehicle and compares said position with a manually triggered location-determining means in order to output target information, **characterized in that** it is removably arranged in a mount in the vehicle and continuously stores the current position until it is removed from the mount.

2. Device according to Claim 1, **characterized in that** in the mount it is supplied or buffered from the vehicle power system.

3. Device according to one of the preceding claims, **characterized in that** it receives its position information from a vehicle-specific navigation system.

4. Device according to one of the preceding claims, **characterized in that** it is arranged under the front windscreen or the rear window of the vehicle.

5. Device according to one of the preceding claims, **characterized in that** it is equipped with a spatially fixed direction reference which is specified with respect to the target direction.

6. Device according to one of Claims 1 to 4, **characterized in that** it has a further memory position which is assigned to the previous position data, and **in that** a display relating to the difference between the two most recent target directions is provided.

## Revendications

1. Dispositif pour la localisation d'un véhicule à l'arrêt depuis un emplacement actuel au moyen d'un récepteur mobile pour des satellites de navigation dont le module de calcul enregistre la position d'arrêt en quittant le véhicule et compare celle-ci avec une détermination d'emplacement déclenchée manuellement en vue de produire une information de cible, **caractérisé en ce qu'**il est disposé de manière amovible dans un support dans le véhicule et enregistre continuellement la position courante jusqu'à ce qu'il soit sorti du support.

2. Dispositif selon la revendication 1, **caractérisé en ce que** dans le support, il est alimenté ou bufférisé à partir du réseau du véhicule.

3. Dispositif selon l'une des revendications précédentes, **caractérisé en ce qu'**il obtient ses informations de position à partir d'un équipement de navigation propre au véhicule.

4. Dispositif selon l'une des revendications précédentes, **caractérisé en ce qu'**il est disposé sous le pare-brise ou la lunette arrière du véhicule.

5. Dispositif selon l'une des revendications précédentes, **caractérisé en ce qu'**il est équipé d'une référence de direction fixe dans l'espace, laquelle est indiquée par rapport à la direction de la cible.

6. Dispositif selon l'une des revendications 1 à 4, **caractérisé en ce qu'**il dispose d'un emplacement mémoire supplémentaire qui est associé aux anciennes données de position et qu'il est prévu une indication de la différence entre les deux directions les plus récentes de la cible.
